# EUROPEAN PATENT SPECIFICATION

(11) **EP 0 561 178 B1**
(45) Date of publication and mention of the grant of the patent: **29.10.1997**
(21) Application number: 93102712.2
(22) Date of filing: 20.02.1993
(51) Int. Cl.: G01B 11/24, G01M 11/02, G01B 11/30

(54) **Improvements in or relating to surface curvature measurement**
Krümmungsmessung einer Oberfläche
Mesure de la curvature d'une surface

(30) Priority: 14.03.1992 GB 9205655; 26.06.1992 GB 9213626
(43) Date of publication of application: 22.09.1993
(73) Proprietor: ROKE MANOR RESEARCH LIMITED, Romsey, Hampshire, SO51 0ZN (GB)
(72) Inventor: Manning, Kevin Ross, Southampton, Hampshire SO4 3UW (GB)
(74) Representative: Allen, Derek

(56) References cited:
- WO-A-91/12510
- US-A- 4 007 990
- US-A- 4 289 400
- US-A- 4 410 267
- SOVIET PATENTS ABSTRACTS Section EI, Week 9022, 11 July 1990 Derwent Publications Ltd., London, GB; Class S02, AN 90-170441 & SU-A-1 523 907 (NOVOS GEODESY CARTO) 23 November 1989.

## Description

This invention relates to apparatus for the measurement of surface curvature and more especially, but not exclusively, it relates to apparatus for the measurement of the curvature of a lens.

The curvature of lenses for optical purposes for use either in the visible or the non-visible spectrum, or the curvature of microwave lenses, must be precise for many applications and thus it is necessary to provide apparatus which can be used (e.g. during manufacture) for curvature measurement purposes.

Known methods of measurement comprise apparatus which generally falls into one or other of two categories. The first category comprises contact methods and the second category comprises non-contact methods.

Contact methods primarily comprise an instrument, called a spherometer, which measures the height of the surface from a plane defined by a ring that rests on the measurement surface. The relationship which obtains between this height and the diameter of the ring, can be used to provide the radius of curvature. Another contact method uses test plates, which have a radius of curvature very close to the radius that is being measured. Thus when a test plate is placed in contact with the surface under measurement, usually by edge contact, and a mono-chromatic light is arranged to illuminate the surface, interference fringes will be seen. The number of fringes indicates the difference between the measurement surface and the test and the test surface. These contact methods can however physically damage the surface.

Non-contact methods, which do not cause physical damage, are usually preferred. Known non-contact methods make use of an interferometer with internal test spheres. With this instrument, a surface to be measured is arranged to reflect a convergent cone of monochromatic light from the interferometer back into the instrument. This is done at two positions, one of which is when an emergent cone is focused at the surface and the other of which is when its focus is coincident with the centre of the radius of curvature. At these positions interference fringes are seen and when the number of fringes is a minimum, the required position is found. The distance that the surface is moved is thus the radius of the surface. Another method requires the use of an autocollimator and performs the measurements in a similar way to the interferometer but relies on the observation of the focused spot rather than the interference fringes. These known non-contact methods are however somewhat inconvenient in practice.

In Soviet Abstract, Week 9022, 11 July 1990, Derwent Publications Ltd, GB, Class S02, AN 90-170441, there is discussed an apparatus for measuring the curvature of a lens surface, comprising a radiation source, position sensitive photo detectors, which are mounted on a moveable carriage, and photo detectors for detecting radiation reflected from the lens surface to be measured. The photo detectors send an output signal to a data processing unit so that the angle of reflection of the beams can be calculated. The data processing unit also uses the data from the carriage displacement sensor to calculate the distance between the reflected beams. The curvature of the lens surface is then calculated from the angle of reflection on the distance from the optical axis to the incident beam.

Another known form of measuring apparatus is discussed in US Patent No 4,289, 400, wherein apparatus is provided for continuously measuring a gradient of a curved surface at a number of different points thereon, by means of a laser beam reflected at the point to be measured on the surface to make a beam spot on a photo sensor. The photo sensor follows the beam spot while the centre of the beam spot and the centre of the photo sensor coincide. The displacement between the beam spot from the point subjected to measurement and the beam spot from a reference point on the surface of the photo sensor is proportional to the gradient at the point subjected to measurement. A numerical control table is used to determine the positional relationship of the point to be measured with respect to the laser beam and an X - Y recorder is used to follow the beam spot.

It is an object of the present invention to provide apparatus for the measurement of lens curvature which is convenient and simple to use.

According to the present invention there is provided an apparatus for the measurement of a radius of curvature of a surface of an object having a plurality of at least partially reflective surfaces, at least part of said apparatus is arranged for relative meridional movement in a plane substantially orthogonal to an optical axis of transform lens means, comprising:
at least one source of electromagnetic radiation,
electromagnetic radiation detector means for detecting electromagnetic radiation,
said transform lens means being positioned and arranged for focusing and transforming the electromagnetic radiation reflected from at least one of said plurality of surfaces according to its incident angle into a position on said detector means, said detector means being arranged to provide at least one output signal from each of said plurality of surfaces characteristic of at least one displaced position of the source thereon at which the radiation is incident,
signal processing means, responsive to at least a pair of said output signals for providing a measurement of said radius of a curvature at each of the plurality of surfaces, characterised by
an additional light detector means for detecting electromagnetic radiation from said source or from an additional source of electromagnetic radiation and arranged to provide signals for said signal processing means when said electromagnetic radiation reflected from the surface to be measured is normal to at least one of the plurality of surfaces.

The apparatus may comprise a beam splitter via which light radiation from the source is directed onto the surface, the beam splitter being positioned between the detector means and the surface.

The beam splitter may be positioned between a lens means and the surface.

Alternatively the beam splitter may be positioned between the detector means and the lens means.

Alternatively the apparatus may be arranged to be hand held and may comprise an additional light detector arranged to provide signals for the signal processor.

The additional detector may according to one embodiment be arranged to be responsive to light from the source which is directed onto the surface via a further beam splitter and via which further beam splitter light reflected from the surface is arranged to pass to the said additional detector.

According to an alternative embodiment, however, the additional detector may be arranged to be responsive to light reflected from the surface and originating from a further light source, light from the said further source being directed to and from the surface via a further beam splitter.

The additional detector may comprise an "on-axis" detector for providing an indication when light incident upon the further detector is reflected from the surface so as to be orthogonal to the said optical axis.

The detector means may comprise an array of photosensitive elements, signals from which provide an indication of the position thereon whereat light is incident.

Alternatively the detector means may comprise an optical detector arrangement which is equivalent to an optical potentiometer.

Some embodiments of the invention will now be described solely by way of example, with reference to the accompanying drawings, in which,
FIGURE 1 is a block schematic diagram of apparatus for measuring the curvature of a lens which is an explanatory example not covered by the claims.
FIGURE 2 is a block schematic diagram of apparatus for measuring the curvature of the lens which is an explanatory example not covered by the claims.
FIGURE 3 is a block schematic diagram of apparatus in accordance with a further embodiment of the invention for measuring the curvature of a lens;
FIGURE 4 is a block schematic diagram of a hand held instrument for measuring the curvature of a lens;
FIGURE 5 is a block schematic diagram of an alternative hand held instrument for measuring the curvature of a lens;
FIGURE 5a is an alternative arrangement to Figure 5, wherein two beams are generated from a single source;
FIGURE 6 is a block schematic diagram of an alternative apparatus for automatically determining the position of an optical axis, and,
FIGURE 7 shows one form of display which may be afforded by apparatus as hereinbefore described with reference to Figure 1 for example.

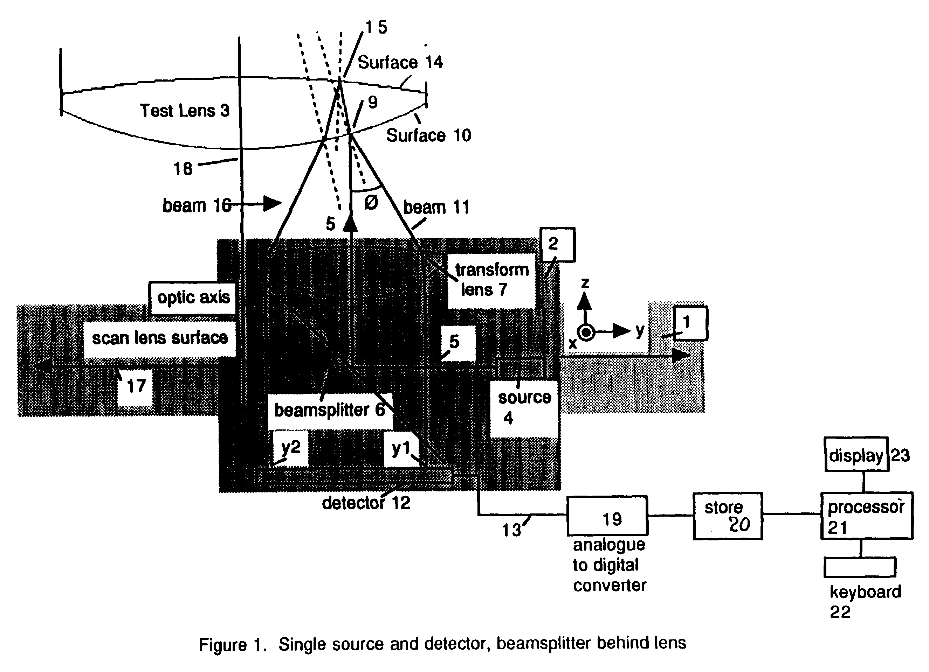

Referring now to Figure 1 which is an explanatory example not covered by the claims, apparatus for measuring the curvature of a lens comprises a rigidly mounted optical bench 1 on which a platform 2 is slidably mounted for movement with respect to a lens 3 under test. Mounted on the platform 2 is a laser light source 4 which is arranged to direct a beam of light 5 towards a beam splitter 6. The beam 5 from the source 4 is reflected from the beam splitter 6 through a transform lens 7 so as to be collimated or focused at a point 9 on an outer surface 10 of the lens 3. Reflection from the point 9 results in a beam 11 which is focused by the transform lens 7 onto an elongate detector 12 which comprises a photo-diode array. The beam 11 is incident on the detector 12 at a point y1, a signal being produced on an output line 13 from the detector 12 which is indicative of the position y1 whereat the beam 11 is incident upon the detector 12. With the position of the platform 2 as shown in Figure 1, light is also reflected from the rear surface 14 of the lens 3 at a point 15 thereby to produce a beam 16 which is focused by the transform lens 7 onto a point y2 on the detector 12.

As the platform 2 is moved in the direction indicated by an arrow 17, the points y1 and y2 will tend to move together until they are coincident when the beam 5 is on the lens axis 18.

It will be appreciated that by measuring the distance moved by the platform from the optic axis and determining the angles of the beams 11 or 16, made with this axis, surface curvature can be precisely measured provided the law of curvature is known, i.e. spherical or parabolic etc. If the law of curvature is not known, then a number of measurements can be taken in order to calculate the curvature of the surface 10, or the curvature of the surface 14. In order to facilitate automatic computation of the curvature, signals on the line 13 are fed to an analogue to digital converter 19, which produces digital signals which are fed to a store 20. Thus digital signals may be stored corresponding to the position of the platform 2 when the beam 5 is coincident with the axis 18 and when the beams 11 and 16 are projected at angles which correspond to positions of the points y1 and y2 on the detector 12.

It will be appreciated that this method of measuring radius of curvature assumes that the beams are scanned in the meridional plane of the lens 3 under test. It is therefore necessary to move the assembly 2 in the x direction, to find the vertex of the lens and therefore its meridional plane.

From this stored digital information it is a relatively simple matter to compute by means of a processor 21, which may be operated under the control of a keyboard 22, data corresponding to the curvature of the surface 10 or the curvature of the surface 14 of the lens 3, which data may be displayed on a display unit 23.

It will be appreciated that the arrangement of Figure 1 may be modified by simply transposing the relative positions of the source 4 and the detector 12 thereby to produce an exactly equivalent alternative arrangement.

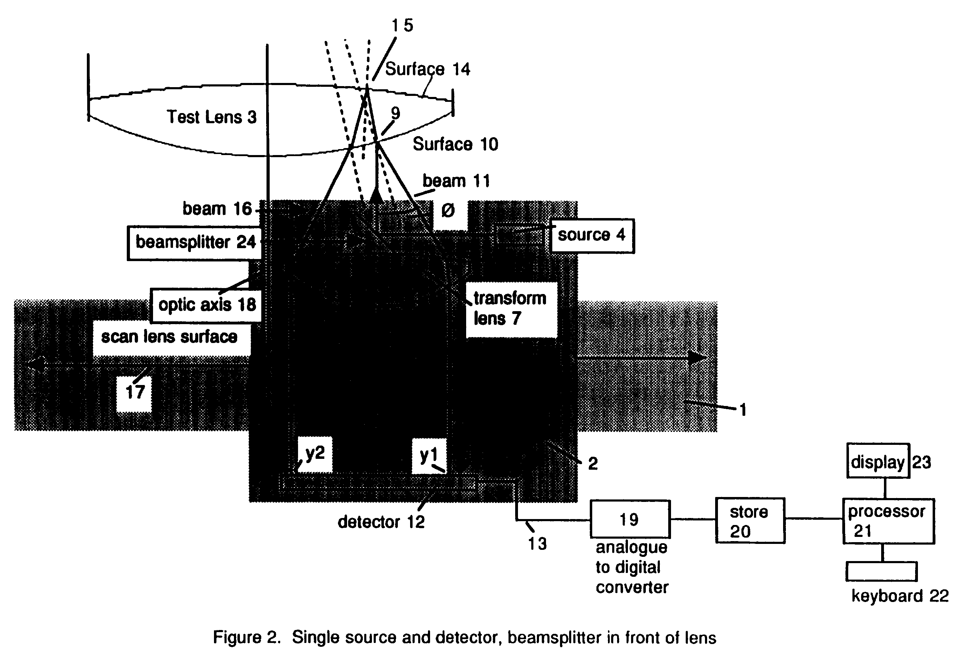

Referring now to Figure 2 which is an explanatory example not covered by the claims, wherein corresponding parts of the apparatus bear the same numerical designations as in Figure 1, a similar arrangement is shown but instead of using a beam splitter 6, positioned between the detector 12 and the transform lens 7, as shown in Figure 1, a beam splitter 24 is used which is positioned between the lens 3 and the transform lens 7. It will be appreciated that with the arrangement as shown in Figure 2, similar results are achieved but the transform lens does not of course serve to focus light from the source 4 onto the surfaces of the lens 3, and thus it is collimated or focused independently by optics internal to the source.

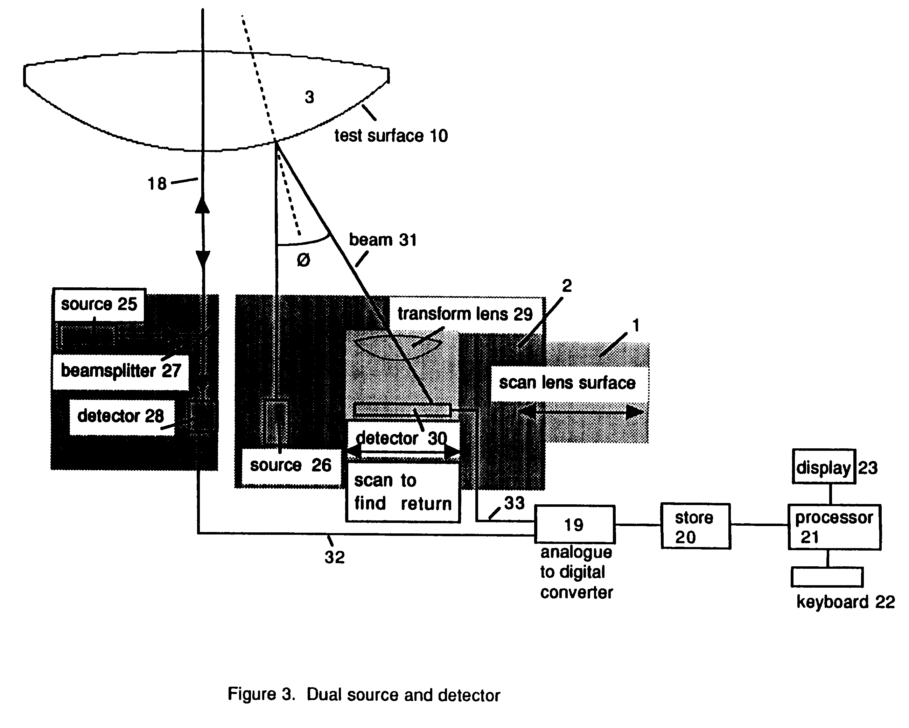

The arrangements just before described with reference to Figure 1 and Figure 2 use a single light source 4, however, in a first embodiment of the invention, as shown in Figure 3, two light sources 25 and 26 are used. The light source 25 is used in conjunction with a beam splitter 27 and an optical detector 28 to establish the position of the optical axis 18, and the source 26 is used in conjunction with a transform lens 29 and an optical detector 30 which is similar to the detector 12, to determine the angle of a reflected beam 31 from the surface 10 of the lens 3. The position of the platform 2, relative to the axis 18, is also recorded. Analogue signals corresponding to these positions are fed via lines 32 and 33 respectively to the analogue to digital converter 19 and a processing operation is thereafter carried out as described with reference to Figure 1 in order to produce a data display at the display unit 23 which corresponds to the curvature of the lens.

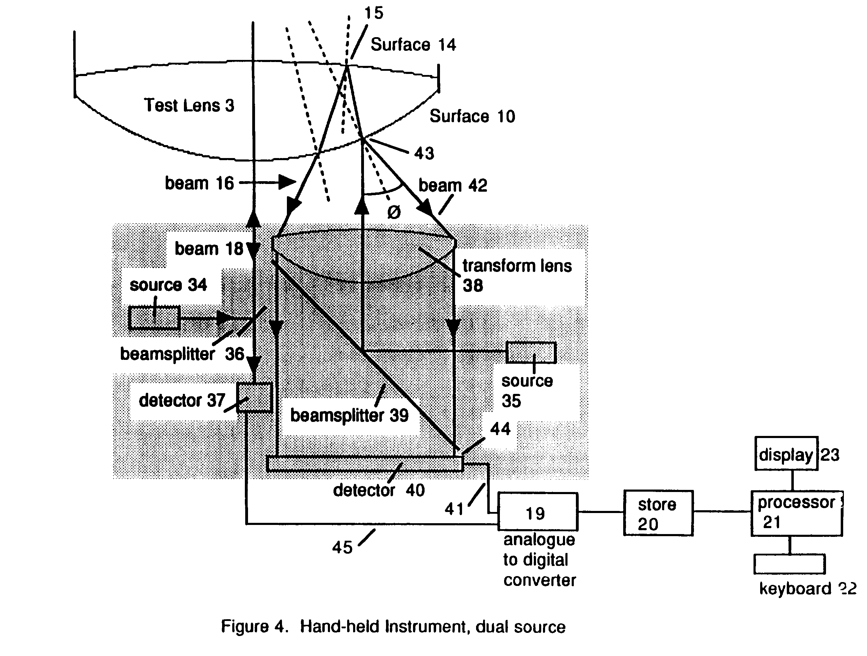

In the arrangements so far described with reference to Figures 1, 2 and 3 an optical bench has been used wherein the platform 2 is moveable to produce digital signals in dependence upon lens curvature, whereby the curvature may be measured. However, as shown in Figure 4, a hand held instrument may be fabricated comprising two light sources 34 and 35. The light source 34 is used in conjunction with a beam splitter 36 and a optical detector 37 to establish the position of the optical axis 18 of the lens 3 under test and the light source 35 is used in conjunction with a transform lens 38, a beam splitter 39 and an optical detector 40 to produce an analogue signal on a line 41 corresponding to a point 44 on the detector 40 whereat a beam 42, derived from the source 35 and reflected from a point 43, is incident. This point 44 is characteristic of an angle ⌀ subtended by the beam 42 with respect to the optical axis 18.

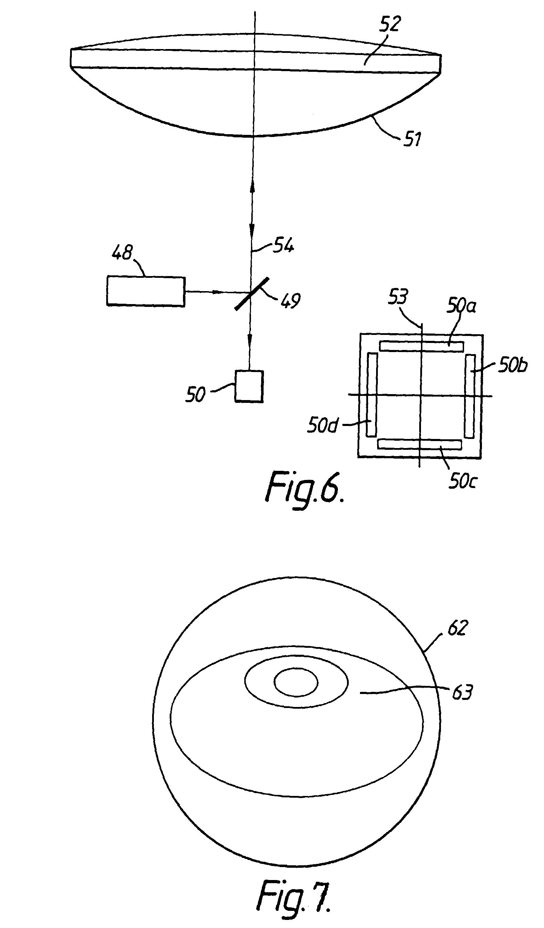

In use of this apparatus as shown in Figure 4, the surface of the lens 3 is scanned by the hand held apparatus and when the optical axis 18 is detected as indicated by an appropriate signal on a line 45, the corresponding signal on the line 41 is automatically translated to a corresponding digital signal in the analogue to digital converter 19 and stored in the store 20. The subsequent signal processing is thereafter effected as hereinbefore described with reference to Figure 1. It will of course be appreciated that an efficient method of detecting the optical axis 18 during a manual scan must be devised to store at the instant of axis detection, a digital signal corresponding to the signal on the line 41. An alternative way, to that used for previous figures of detecting the optical axis during a manual scanning operation will hereinafter be described with reference to Figure 6.

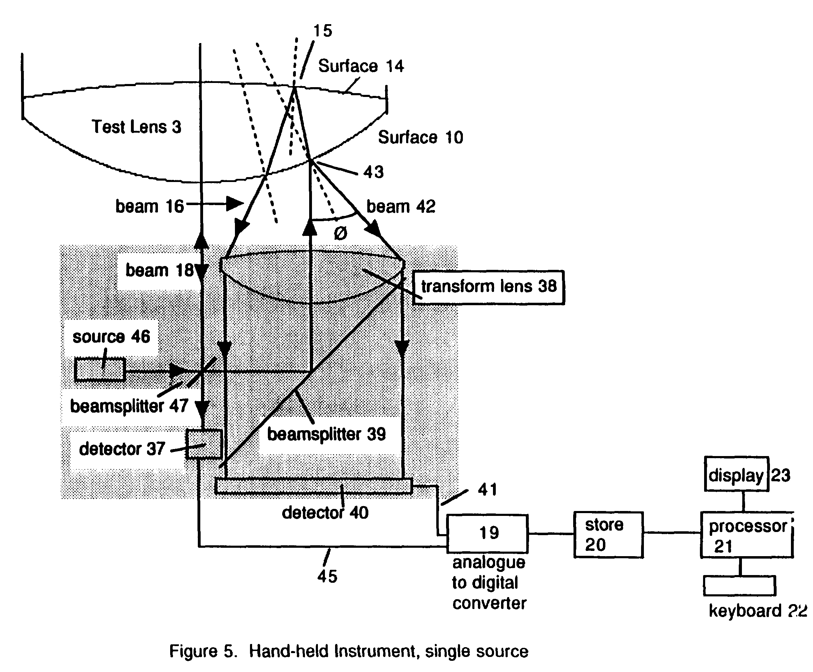

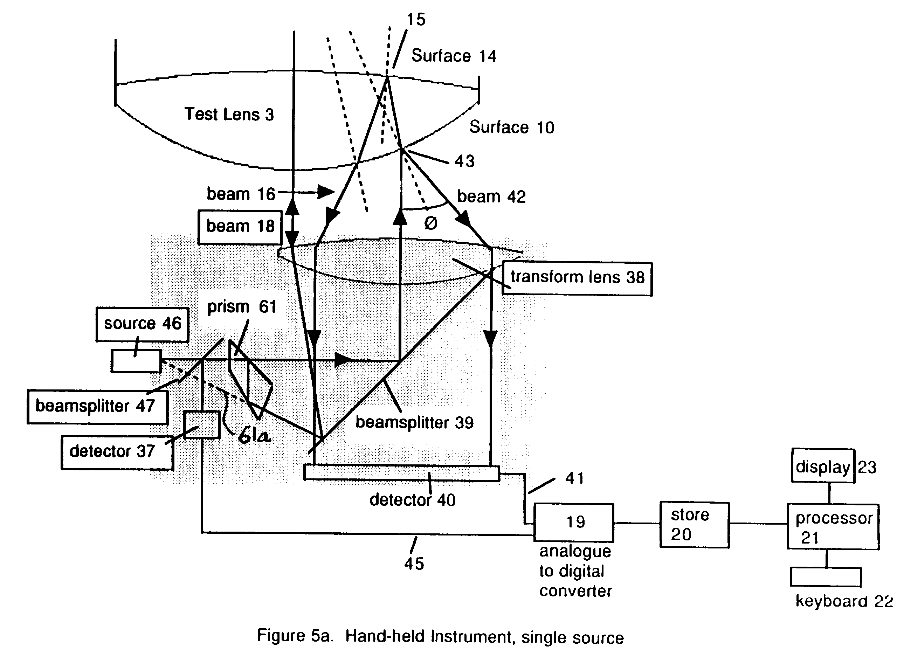

Referring firstly to Figure 5 however, in an alternative embodiment of the invention as applied to a hand held instrument, a single light source 46 may be used as shown in Figure 5, wherein parts corresponding to Figure 4 bear the same numerical designations. In Figure 5 it can be seen that the source 46 is used in conjunction with a beam splitter 47 and a detector 37 to produce signals on the line 45 corresponding to the position of the optical axis 18. Light from the source is also used to produce the beam 42, as shown in Figure 5, and this is achieved by changing the position of the beam splitter 39 from the position as shown in Figure 4 to a new position as shown in Figure 5, whereby light from the source 46 is directed onto the surface 10 of the lens 3 at the point 43 thereby to produce the reflected beam 42.

Alternatively, as shown in Figure 5a, two beams may be generated from one source. In this arrangement an additional element defined by a prism 61 is used, which comprises a semi-reflecting coating on a surface which is at 45° to the incident beam. A totally reflecting surface is on the prism face that the beam impinges upon when partially reflected from the semi-reflecting coating. The beam when reflected from this totally reflecting surface exits the prism via a face that is normal to the beam. This beam when projected backwards, as indicated by broken line 61a, appears to emanate from a point on the incident beam to the prism. If this point is arranged, by moving the prism, to be at the focus of the lens 38 then the two beams that emerge from this lens will be parallel to each other, which is required for the accurate operation of the instrument. All measurements are accomplished as previously described in connection with Figures 4 and 5.

As has already been mentioned and as will readily be appreciated, it is necessary with the hand held arrangement just before described with reference to Figures 4 and 5, accurately to determine, during a manual scan, the position of the optical axis 18 and this may alternatively be achieved by means of apparatus as shown in Figure 6. The arrangement as shown in Figure 6 comprises a light source 48 which is operatively associated with a beam splitter 49 and a light detector 50. Light originating from the source 48 and reflected from the beam splitter 49 is directed onto the surface 51 of a lens under test 52. The detector 50 comprises four detector elements 50a, 50b, 50c and 50d. Light is directed onto the detector elements 50a, 50b, 50c and 50d, through an alignment cross 53. Thus, it will be appreciated that when the reflected and incident beams are aligned on the optical axis 54, as shown in Figure 6, the shadow of the cross will be symmetrically positioned with respect to the detector elements 50a, 50b, 50c and 50d, thereby to produce a characteristic output signal which is detectable and detection of which in this symmetrical position indicates the required positioning of the instrument in line with the optical axis 54.

Although the processor 21 and display may take various forms, Figure 7 shows one presentation of the output signal from the processor 21 by the display 23. It takes the form of a contour plot of the measured surface whose periphery is indicated by a circular line 62. This plot enables an easy and accurate assessment to be made of the surface form and figure. The contours 63, indicates the deviation in height that the measured surface has from that which is desired. Other forms of output could include interferograms, e.g. plots of fringes under monochromatic illumination, profile plots, e.g. plots showing variation in radius relative to the required radius, and 3-D surface plots.

Various modifications may be made to the arrangements hereinbefore described without departing from the scope of the invention and for example it will be appreciated that light at any frequency may be used in the visible or non-visible spectrum and that alternative sources of electromagnetic radiation may be used in accordance with the particular application in view.

## Claims

1. An apparatus for the measurement of a radius of curvature of a surface of an object (3) having a plurality of at least partially reflective surfaces (10), at least part of said apparatus is arranged for relative meridional movement in a plane substantially orthogonal to an optical axis of transform lens means (7), comprising:
at least one source of electromagnetic radiation (4, 25),
electromagnetic radiation detector means (12) for detecting electromagnetic radiation,
said transform lens means (7) being positioned and arranged for focusing and transforming the electromagnetic radiation reflected from at least one of said plurality of surfaces (10) according to its incident angle into a position on said detector means (12), said detector means (12) being arranged to provide at least one output signal from each of said plurality of surfaces (10) characteristic of at least one displaced position of the source thereon at which the radiation is incident,
signal processing means (21), responsive to at least a pair of said output signals for providing a measurement of said radius of curvature at each of the plurality of surfaces (10), characterised by
an additional light detector means (28) for detecting electromagnetic radiation from said source (4) or from an additional source of electromagnetic radiation (25) and arranged to provide signals for said signal processing means (21) when said electromagnetic radiation reflected from the surface to be measured is normal to at least one of the plurality of surfaces (10).

2. An apparatus as claimed in Claim 1, further comprising a beam splitter (6) via which light radiation from the at least one source (4) is directed onto the surfaces (10), the beam splitter (6) being positioned between the detector means (12), and the surfaces (10).

3. An apparatus as claimed in Claim 2, wherein the beam splitter (24) is positioned between the transform lens means (7) and at least one of the surfaces (10).

4. An apparatus as claimed in Claim 2, wherein the beam splitter (6) is positioned between the detector means (12) and the transform lens means (7).

5. An apparatus as claimed in Claim 2, wherein the additional light detector means (28) is arranged to be responsive to light from the at least one source (4, 25) which is directed onto at least one of the plurality of surfaces (10) via a further beam splitter (27) and via which further beam splitters (27) light reflected from at least one of the plurality of surfaces (10) is arranged to pass to said additional light detector means (28).

6. An apparatus as claimed in Claim 5, wherein the additional light detector means (28) is arranged to be responsive to light reflected from at least one of the plurality of surfaces (10) and originating from said additional source (25) of electromagnetic radiation, light from said additional light source (25) being directed to and from at least one of the plurality of surfaces via a further beam splitter (61).

7. An apparatus as claimed in any preceding Claim, wherein the detector means (12) comprises an array of photosensitive elements, signals from which provide an indication of the position thereon whereat light is incident.

8. An apparatus as claimed in any preceding Claim, wherein a first part (34-30) of said apparatus is arranged to be hand-held and a second part (19-22) of the said apparatus is not hand-held, and further comprising communication means (41, 45) for passing signals from said first part to said second part.

9. An apparatus as claimed in any of the preceding Claims 1 to 7, wherein the apparatus (19-22; 34-40) is hand held.

## Patentansprüche

1. Vorrichtung zum Messen eines Krümmungsradius einer Oberfläche eines Objekts (3), das mehrere wenigstens teilweise reflektierende Oberflächen (10) hat, wobei wenigstens ein Teil der Vorrichtung für eine meridionale Relativbewegung in einer Ebene angeordnet ist, die im wesentlichen senkrecht zu einer optischen Achse eines Transformationslinsenmittels (7) ist, mit
wenigstens einer Quelle (4, 25) elektromagnetischer Strahlung,
einem Erfassungsmittel (12) für elektromagnetische Strahlung zum Erfassen elektromagnetischer Strahlung,
wobei das Transformationslinsenmittel (7) so positioniert und angeordnet ist, daß es die von wenigstens einer der mehreren Oberflächen (10) reflektierte elektromagnetische Strahlung entsprechend deren Einfallswinkel in eine Position auf dem Erfassungsmittel (12) fokussiert und transformiert, wobei das Erfassungsmittel (12) so angeordnet ist, daß es wenigstens ein Ausgangssignal von jeder der mehreren Oberflächen (10) liefert, das für wenigstens eine verstellte Position der Quelle darauf charakteristisch ist, bei der die Strahlung einfällt,
einem Signalverarbeitungsmittel (21), das auf wenigstens ein Paar der Ausgangssignale anspricht, um eine Messung des Krümmungsradius an jeder der mehreren Oberflächen (10) durchzuführen, gekennzeichnet durch
ein zusätzliches Lichterfassungsmittel (28) zum Erfassen elektromagnetischer Strahlung von der Quelle (4) oder von einer zusätzlichen Quelle (25) elektromagnetischer Strahlung, das so angeordnet ist, daß es Signale für das Signalverarbeitungsmittel (21) bereitstellt, wenn die von der zu vermessenden Oberfläche reflektierte elektromagnetische Strahlung zu wenigstens einer der mehreren Oberflächen (10) senkrecht ist.

2. Vorrichtung nach Anspruch 1, zusätzlich enthaltend einen Strahlteiler (6), mittels welchem Lichtstrahlung von der wenigstens einen Quelle (4) auf die Oberflächen (10) gerichtet wird, wobei der Strahlteiler (6) zwischen dem Erfassungsmittel (12) und den Oberflächen (10) angeordnet ist.

3. Vorrichtung nach Anspruch 2, bei der der Strahlteiler (24) zwischen dem Transformationslinsenmittel (7) und wenigstens einer der Oberflächen (10) angeordnet ist.

4. Vorrichtung nach Anspruch 2, bei der der Strahlteiler (6) zwischen dem Erfassungsmittel (12) und dem Transformationslinsenmittel (7) angeordnet ist.

5. Vorrichtung nach Anspruch 2, bei der das zusätzliche Lichterfassungsmittel (28) so angeordnet ist, daß es auf Licht von der wenigstens einen Quelle (4, 25) anspricht, das auf wenigstens eine der mehreren Oberflächen (10) mittels eines weiteren Strahlteilers (27) gerichtet wird, wobei von der wenigstens einen der mehreren Oberflächen (10) reflektiertes Licht mittels des zusätzlichen Strahlteilers (27) veranlaßt wird, auf das zusätzliche Lichterfassungsmittel (28) zu fallen.

6. Vorrichtung nach Anspruch 5, bei der das zusätzliche Lichterfassungsmittel (28) so angeordnet ist, daß es auf Licht anspricht, das von wenigstens einer der mehreren Oberflächen (10) reflektiert wird und von der zusätzlichen Quelle (25) elektromagnetischer Strahlung stammt, wobei Licht von der zusätzlichen Lichtquelle (25) mittels eines weiteren Strahlteilers (61) auf wenigstens eine der mehreren Oberflächen und von dieser weg geleitet wird.

7. Vorrichtung nach einem der vorhergehenden Ansprüche, bei der das Erfassungsmittel (12) ein Feld von lichtempfindlichen Elementen enthält, deren Signale eine Anzeige für die Position darauf liefert, bei der Licht einfällt.

8. Vorrichtung nach einem der vorhergehenden Ansprüche, bei der ein erster Teil (34-40) der Vorrichtung so ausgebildet ist, daß er mit der Hand gehalten wird, und ein zweiter Teil (19-22) der Vorrichtung nicht mit der Hand gehalten wird, und die zusätzlich ein Kommunikationsmittel (41, 45) enthält, um Signale von dem ersten Teil zum zweiten Teil zu übertragen.

9. Vorrichtung nach einem der Ansprüche 1 bis 7, bei der die Vorrichtung (19-22; 34-40) in der Hand gehalten wird.

## Revendications

1. Appareil de mesure d'un rayon de courbure de la surface d'un objet (3) ayant plusieurs surfaces partiellement réfléchissantes au moins (10), une partie au moins de l'appareil étant disposée afin qu'elle présente un mouvement méridional relatif dans un plan sensiblement perpendiculaire à un axe optique d'un dispositif à lentille de transformation (7), comprenant :
au moins une source d'un rayonnement électromagnétique (4, 25),
un dispositif (12) détecteur du rayonnement électromagnétique,
le dispositif (7) à lentille de transformation étant positionné et disposé afin qu'il assure la focalisation et la transformation du rayonnement électromagnétique réfléchi par l'une au moins des surfaces (10) en fonction de l'angle d'incidence à une position sur le dispositif détecteur (12), le dispositif détecteur (12) étant destiné à donner au moins un signal de sortie pour chacune des surfaces (10), ce signal étant caractéristique d'au moins une position déplacée de la source sur cette surface sur laquelle le rayonnement est incident, et
un dispositif (21) de traitement de signaux commandé par une paire au moins de signaux d'entrée et de sortie et destiné à donner une mesure du rayon de courbure de chacune des surfaces (10), caractérisé par :
un dispositif détecteur de lumière supplémentaire (28) destiné à détecter le rayonnement électromagnétique de la source (4) ou d'une source supplémentaire d'un rayonnement électromagnétique (25) et destiné à donner des signaux au dispositif de traitement de signaux (21) lorsque le rayonnement électromagnétique réfléchi par la surface à mesurer est perpendiculaire à l'une au moins des surfaces (10).

2. Appareil selon la revendication 1, comprenant en outre un répartiteur de faisceau (6) par l'intermédiaire duquel le rayonnement lumineux d'une source au moins (4) est dirigé sur les surfaces (10), le répartiteur de faisceau (6) étant placé entre le dispositif détecteur (12) et les surfaces (10).

3. Appareil selon la revendication 2, dans lequel le répartiteur de faisceau (24) est placé entre le dispositif à lentille de transformation (7) et l'une au moins des surfaces (10).

4. Appareil selon la revendication 2, dans lequel le répartiteur de faisceau (6) est placé entre le dispositif détecteur (12) et le dispositif à lentille de transformation (7).

5. Appareil selon la revendication 2, dans lequel le dispositif détecteur de lumière supplémentaire (28) est disposé afin qu'il soit sensible à la lumière d'au moins une source (4, 25) qui est dirigée sur au moins une surface parmi lesdites surfaces (10) par l'intermédiaire d'un répartiteur de faisceau supplémentaire (27) et la lumière réfléchie par l'une au moins desdites surfaces (10) est destinée à passer vers le dispositif détecteur de lumière supplémentaire (28) par ce répartiteur de faisceau supplémentaire (27).

6. Appareil selon la revendication 5, dans lequel le dispositif détecteur de lumière supplémentaire (28) est destiné à être sensible à la lumière réfléchie par une surface au moins desdites surfaces (10) et provenant de la source supplémentaire (25) de rayonnement électromagnétique, la lumière de la source de lumière supplémentaire (25) étant dirigée vers l'une au moins des surfaces et à partir de l'une au moins des surfaces par l'intermédiaire d'un répartiteur de faisceau supplémentaire (61).

7. Appareil selon l'une quelconque des revendications précédentes, dans lequel le dispositif détecteur (12) comporte une matrice d'éléments photosensibles dont le signaux donnent une indication de la position à laquelle la lumière tombe.

8. Appareil selon l'une quelconque des revendications précédentes, dans lequel une première partie (34-40) de l'appareil est destinée à être tenue à la main et une seconde partie (19-22) de l'appareil n'est pas tenue à la main, l'appareil comprenant en outre un dispositif de communication (41, 45) destiné à transmettre des signaux de la première partie à la seconde partie.

9. Appareil selon l'une quelconque des revendications 1 à 7, dans lequel l'appareil (19-22 ; 34-40) est tenu à la main.
